Europäisches Patentamt

European Patent Office

Office européen des brevets

(19)

(11) **EP 0 467 134 B1**

(12) **EUROPÄISCHE PATENTSCHRIFT**

(45) Veröffentlichungstag und Bekanntmachung des Hinweises auf die Patenterteilung:
**24.04.1996 Patentblatt 1996/17**

(51) Int Cl.⁶: **G05D 23/19**, H05B 3/74

(21) Anmeldenummer: **91110778.7**

(22) Anmeldetag: **28.06.1991**

(54) **Verfahren und Vorrichtung zum Anzeigen eines anomalen thermischen Belastungszustandes einer Heizfläche aus Glaskeramik oder einem vergleichbaren Material**

Method and apparatus for indicating an abnormal thermal load condition of a heating surface

Procédé et appareil pour indiquer un état de charge anormal thermique d'un panneau chauffé

(84) Benannte Vertragsstaaten:
**AT CH DE ES FR GB IT LI**

(30) Priorität: **18.07.1990 DE 4022844**

(43) Veröffentlichungstag der Anmeldung:
**22.01.1992 Patentblatt 1992/04**

(73) Patentinhaber:
- **Schott Glaswerke**
  **D-55122 Mainz (DE)**
  Benannte Vertragsstaaten:
  **CH DE ES FR IT LI AT**
- **Carl-Zeiss-Stiftung**
  **trading as SCHOTT GLASWERKE**
  **D-55122 Mainz (DE)**
  Benannte Vertragsstaaten:
  **GB**

(72) Erfinder:
- **Schultheis, Bernd**
  **W-6501 Schwabenheim (DE)**
- **Kristen, Klaus**
  **W-6200 Wiesbaden (DE)**

(56) Entgegenhaltungen:
**DE-A- 2 219 890**     **DE-A- 3 744 372**
**DE-C- 2 139 828**     **US-A- 4 237 368**
**US-A- 4 639 579**

**Beschreibung**

Die Erfindung betrifft ein Verfahren zum Erkennen und Anzeigen eines anomalen thermischen Belastungszustandes einer Heizfläche aus Glaskeramik oder einem vergleichbaren Material, insbesondere einer Glaskeramikkochfläche, sowie eine Vorrichtung zur Durchführung des Verfahrens bei einem Kochfeld mit Glaskeramikkochfläche.

Heizflächen aus Glaskeramik oder einem vergleichbaren Material finden beispielsweise Verwendung als Wand- oder Deckenstrahler, Wärmetauscher oder andere großflächige Beheizungseinrichtungen, die in beliebiger Weise beheizt werden können.

Von besonderem Interesse sind heutzutage elektrisch oder gasbeheizte Kochfelder oder Einzelkochstellen, deren Heizfläche aus Glaskeramik besteht. Kochfelder dieser Art sind allgemein bekannt und schon vielfach in der Patentliteratur beschrieben worden. Die Beheizung der Heizzonen dieser Kochfelder erfolgt dabei mittels unterhalb der Glaskeramikkochfläche angeordneter Heizelemente, z.B. elektrisch betriebene Kontaktheizelemente, Strahlungsheizelemente oder Gasbrenner. Weiterhin sind noch Induktionskochfelder bekannt.

Bei den bekannten Haushaltskochfeldern wird die Heizleistung für die Heizelemente durch Vorgabe vom Benutzer fest eingestellt oder durch ein wählbares Zeitprogramm elektronisch, elektromechanisch oder, bei Gasherden über Ventile, rein mechanisch gesteuert. Entsprechende Steuerungen sind beispielsweise in der Patentschrift DE-PS 3 639 186 A1 beschrieben.

Es ist bekannt, Kochzonen (ohne Beschränkung der Allgemeinheit wird im Zusammenhang mit Glaskeramikkochflächen nachfolgend der Begriff Kochzone statt Heizzone verwendet) eines Glaskeramikkochfeldes, die einen größeren Durchmesser aufweisen, zum Beispiel um Töpfe mit größerem Durchmesser und/oder unrunder, beispielsweise ovaler, Bodenfläche zu erhitzen, mit mehreren Heizelementen zu beheizen. Es ist auch bekannt, neben den ständig in Betrieb befindlichen Dauerheizelementen sog. Zuschaltheizelemente einzusetzen, die nur in der Ankochphase mit Leistung beaufschlagt werden, um eine beschleunigte Aufheizung der Kochzone zu erzielen. Die geometrische Anordnung der Heizelemente unterhalb einer Heizzone ist dabei üblicherweise an die Geometrie des Kochgeschirrs angepaßt.

So wird zum Beispiel in der DE-OS 33 14 501 A 1 eine Heizplatte mit zwei zueinander konzentrischen Heizkreisen beschrieben, bei welcher der äußere Heizkreis als Zuschaltheizelement ausgelegt ist.

Die DE-PS 34 06 604 betrifft eine Heizeinrichtung, bei der die Kochzone mittels Hoch- und Normaltemperaturstrahlungsheizelementen beheizt wird. Die Heizelemente sind dabei so angeordnet, daß die Kochzone in zwei zueinander konzentrische Zonen aufgeteilt ist, wobei die innere Zone ausschließlich durch die vorzugsweise als Zuschaltheizelemente in der Ankochphase einsetzbaren Hochtemperaturstrahlungsheizelemente beheizbar ist und die äußere Zone durch die Normaltemperaturstrahlungsheizelemente. Eine vergleichbare Anordnung von mehreren Strahlungsheizelementen im Bereich einer Kochzone ist auch in der US-PS 4 639 579 zu finden.

Eine Heizeinrichtung mit einem Gasbrenner, der zwei unabhängig voneinander mit Gas beaufschlagbare Brennerkammern aufweist, die z.B. zueinander konzentrische Zonen im Kochzonenbereich begrenzen können, wird in der US-PS 4 083 355 beschrieben.

Bei den üblicherweise eingesetzten Glaskeramiken sind die maximalen Betriebstemperaturen auf 700°C zu begrenzen. Um Überhitzungen der Glaskeramikheizfläche zu vermeiden, werden daher in der Regel sogenannte Schutztemperaturbegrenzer, z.B. ein zwischen den Heizelementen und der Glaskeramikfläche angeordneter Stabausdehnungsschalter, eingesetzt, die üblicherweise bei Überschreiten einer bestimmten Grenztemperatur das Heizelement ganz abschalten oder in seiner Leistung vermindern. Nach Durchlaufen einer Hysteresis wird die volle Heizleistung wieder eingeschaltet. Aus der DE-OS 3 314 501 ist beispielsweise ein Stabausdehnungsschalter bekannt, der entsprechend bei zwei unterschiedlichen Temperaturen schaltet.

Aus der deutschen Patentschrift DE-PS 21 39 828 ist bekannt, daß Glas, Glaskeramik oder ähnliche Materialien eine von der Temperatur abhängige elektrische Leitfähigkeit besitzen, so daß daraus durch Aufbringen von Leiterbahnen, z.B. aus Edelmetallen, Temperaturmeßwiderstände mit steiler Widerstands-Temperatur-Kennlinie, ähnlich den der bekannten NTC-Widerstände, hergestellt werden können.

Diese Art von Temperatur-Sensoren werden in der DE-OS 37 44 372 in Verbindung mit entsprechender Beschaltung dazu benutzt, den o.g. Schutztemperaturbegrenzer vollkommen zu ersetzen. Dazu werden in jeder Kochzone jeweils zwei zueinander parallele Leiterbahnen, die jeweils einen streifenförmigen Glaskeramikwiderstand begrenzen, längs eines halben Durchmessers auf die Glaskeramikkochfläche aufgebracht.

Die Praxis hat gezeigt, daß anomale thermische Belastungen bei Glaskeramikkochflächen ihre Ursache meist in der Verwendung schlechten Kochgeschirrs oder Fehlbedienungen haben.

So tritt z.B. bei Kochgeschirr mit unebener Auflagefläche ein örtlich unterschiedlicher Wärmeentzug in der Kochzone auf. Durch Unachtsamkeit kann leerkochendes Geschirr noch höhere Temperatur/Zeit-Belastungen für die Glaskeramik verursachen. Weitere Extrembelastungen verursachen Töpfe mit zu kleinen Durchmessern sowie versehentlich versetzt, d.h. nicht zentrisch aufgestellte Töpfe. In diesen Fällen wird die Kochzone in den vom Topf nicht abgedeckten Bereichen überhitzt. Die Oberflächentemperatur der Glaskeramik kann in solchen Fällen erheblich über den im Leerlauf, d.h. ohne Topf, gemessenen Temperaturen liegen. Temperaturerhöhungen von bis zu 200 K über der Oberflächentemperatur im Leerlauf sind möglich.

Diese anomalen thermischen Belastungen im Bereich der Kochzonen können sich im Laufe der Zeit zu hohen Temperatur/Zeit-Belastungen aufaddieren und die Zerstörung der Kochflächen zur Folge haben. Extrem hohe Temperaturen können das aufgesetzte Kochgeschirr und auch die Glaskeramik-Kochfläche beschädigen. Topfemaille kann beispielsweise bei versehentlich leerkochendem Stahlemail-Geschirr anschmelzen. Ebenso kann leerkochendes Aluminium-Geschirr durch schmelzendes Aluminium die Glaskeramikoberfläche beschädigen.

Da in der Praxis sowohl schlechtes bzw. ungeeignetes Kochgeschirr verwendet wird als auch die o.g. Fehlbedienungen vorkommen, muß die maximale Oberflächentemperatur im Leerlauf begrenzt werden. Aus dem gleichen Grund ist die spezifische Leistungsdichte der Heizelemente, bezogen auf die Fläche der beheizten Zone, auf derzeit ca. 7 Watt/cm$^2$ begrenzt.

Die bekannten Vorrichtungen zur Temperaturüberwachung und -begrenzung haben den Nachteil, daß, sobald Überhitzungen im Bereich des Temperatursensors detektiert werden, die Leistungszufuhr für die Heizelemente in der gesamten Kochzone unterbrochen oder vermindert wird. Dies führt zu erheblich längeren Ankochzeiten, obwohl, wie z.B. im Falle einer Fehlstellung des Kochgeschirrs, die Ursache für den anomalen thermischen Belastungszustand durch den Benutzer leicht behoben werden könnte.

Die Aufgabe der Erfindung ist, ein Verfahren zum Erkennen und Anzeigen eines anomalen thermischen Belastungszustand bei einer Heizfläche aus Glaskeramik oder einem vergleichbaren Material zu finden, welches nicht nur ein Erkennen und Anzeigen eines Belastungszustandes als solchen, sondern auch von dessen Ursache ermöglicht. Insbesondere soll das Verfahren auf Kochfelder mit Glaskeramikkochflächen anwendbar sein.

Eine weitere Aufgabe der Erfindung besteht darin, eine geeignete Vorrichtung zur Durchführung des Verfahrens bei einem Kochfeld mit Glaskeramikkochfläche bereitzustellen.

Die Aufgabe wird gelöst mit einem Verfahren mit den Merkmalen des Patentanspruchs 1 oder 2. Eine geeignete Vorrichtung zur Durchführung des erfindungsgemäßen Verfahrens bei einem Kochfeld mit Glaskeramikkochfläche ist im Patentanspruch 7 beschrieben.

Die Erfindung macht sich die Tatsache zunutze, daß je nach Verwendung einer Heizfläche bestimmte Ursachen für anomale thermische Belastungszustände, z.B. typische Fehlbedienungen, immer wieder vorkommen. Für solche bekannten Belastungsfälle ist die sich in der Heizfläche einstellende Temperaturverteilung, d.h. insbesondere die örtliche Lage von Überhitzungen, leicht vorhersagbar.

Dies läßt sich in einfacher Weise am Beispiel der am meisten interessierenden Verwendung einer Heizfläche als Kochfläche bei einem Kochfeld demonstrieren.

Da sowohl die Heizzonen, d.h. die Kochzonen, einer Kochfläche als auch die Auflageflächen des Kochgeschirrs üblicherweise kreisförmige Geometrie besitzen, treten bei den eingangs erwähnten, für Kochfelder typischen Belastungsfällen, wie z.B. Topffehlstellung, schlechte Topfqualität usw, wie im folgenden noch ausgeführt wird, Überhitzungen der Kochfläche jeweils nur in einem inneren oder nur in einem äußeren Bereich der Kochzone, oder aber in beiden Bereichen gemeinsam auf.

So wird z.B. bei einer Fehlstellung des Topfes sowie bei einem Topf mit nach außen gewölbten Auflagefläche nur ein äußerer ringförmiger Randbereich der Kochzone oder nur ein Segment dieses Bereichs überhitzt.

Ein nach innen gewölbter Topfboden oder ein zu kleiner Topf führen zu einer Überhitzung des Mittenbereichs der Kochzone, während leergekochtes Kochgeschirr oder fehlendes Kochgeschirr die Überhitzung der gesamten Kochzone zur Folge haben.

Das erfindungsgemäße Verfahren sieht daher vor, mittels mehrerer, voneinander unabhängiger, im Bereich der Heizzone angeordneter Temperatursensoren die für einen bestimmten anomalen thermischen Belastungszustand charakteristische Temperaturverteilung in der Heizfläche zu bestimmen und mittels geeigneter Betriebszustandsanzeigen und/oder optische und/oder akustische Warneinrichtungen anzuzeigen.

Die Verarbeitung der Temperaturmeßsignale zu Steuersignalen für die Anzeige- und/oder Warneinrichtungen erfolgt mit Hilfe an sich bekannter elektronischer Schaltungen, bevorzugt Komparatorschaltung, welche den Temperaturmeßwert eines Sensors mit einer vorgegebenen Schwellentemperatur vergleichen und bei Überschreiten der Schwellentemperatur, d.h., wenn eine lokale Überhitzung detektiert wird, ein Steuersignal für die Anzeige- und Warneinrichtungen erzeugen.

Im einfachsten Fall ist jedem Sensor genau eine optische oder akustische Anzeigeeinrichtung zugeordnet, die dem Benutzer lokale Überhitzungen in dem von dem Sensor überwachten Teilbereich der Heizzone anzeigt. Aus der Kombination der Temperaturmeßsignale aller Sensoren kann der Benutzer dann auf die Temperaturverteilung im gesamten Heizzonenbereich und somit auf die mögliche Ursache für die anomale thermische Belastung schließen.

Bevorzugt werden jedoch den Komparatorschaltungen geeignete Logikschaltungen nachgeordnet, welche so ausgelegt sind, daß sie durch Vergleich der von den einzelnen Temperatursensoren gelieferten und über die Komparatorschaltungen ausgewerteten Meßsignale die Temperaturverteilung im Heizzonenbereich selbständig erkennen und einem bekannten anomalen thermischen Belastungszustand zuordnen.

Voneinander unabhängige Temperatursensoren im Sinne dieser Erfindung können beispielsweise elektromechanisch arbeitende Temperaturfühler mit mehreren voneinander unabhängigen Schaltkontakten, wie zum Beispiel die bekannten Stabausdehnungsschalter, zum Beispiel in Form von Kapillaren mit Salzschmelzenfüllung, mit mehreren, jedoch wenigstens zwei, voneinander unabhängigen Schaltkontakten sein. Dabei sollte vorteilhafterweise der Schaltkontakt, der die maximale Oberflächentemperatur begrenzt, bei einer Temperatur ansprechen, die wenigstens 10 K über den Schalttemperaturen der übrigen Schaltkontakte liegt, mit deren Hilfe die Leistungsreauzierung vorgenommen wird.

Als Temperatursensoren können auch Wärmeleit-Stäbe oder -bleche oder dergleichen verwendet werden, an die außerhalb des Heizkörpers bzw. der beheizten Zone der eigentliche Temperatursensor angekoppelt ist.

Bei Kochfeldern mit Kochzonen mit im wesentlichen kreisförmigen Geometrien lassen sich mit Hilfe von Stabausdehnungsschaltern, die längs eines Halb- oder Durchmessers der Kochzone angeordnet sind, die meisten der bekannten anomalen Belastungsfälle, nämlich solche, die zu einer radialsymmetrischen Temperaturverteilung im Kochzonenbereich führen, vollständig erfassen. Lokal auftretende Temperaturspitzen können damit jedoch nicht detektiert werden. Zudem ist die Temperaturüberwachung nur indirekt möglich, da der Stabausdehnungsschalter keinen direkten Kontakt zur Glaskeramikunterseite besitzt, da er nur im Raum zwischen Heizquelle und Glaskeramikunterseite angeordnet ist.

Eine flächendeckende Temperaturüberwachung läßt sich beispielsweise mit Hilfe von Temperatursensoren, die aus rasterartig im Bereich der Heizzone angeordneten Thermoelementen oder anderen geeigneten Temperaturfühlern bestehen, erreichen. Um einen ausreichenden thermischen Kontakt zur Heizfläche zu gewährleisten, müssen diese an die Heizfläche angedrückt werden. Ebenso lassen sich solche Temperatursensoren in die Heizfläche integrieren. So können beispielsweise Thermoelemente in die Heizfläche eingelassen oder eingewalzt werden.

Insbesondere sind die aus der DE-PS 21 39 828 bekannten, in die Heizflächen integrierten Temperatursensoren, welche aus von jeweils zwei parallel geführten Leiterbahnen begrenzten Glaskeramiktemperaturmeßwiderständen bestehen, geeignet, wobei die Leiterbahnen mittels Siebdruck oder anderer Methoden in geeigneter Anordnung auf die Glaskeramik-Unterseite aufgebracht und anschließend eingebrannt werden. Der sehr stark temperaturabhängige elektrische Widerstand der zwischen den Leiterbahnen eingegrenzten Glaskeramik stellt dabei den eigentlichen Temperaturmeßwiderstand dar.

Mit dieser Methode lassen sich auf einfache Art großflächige Temperatursensoren realisieren, die eine flächendeckende Temperaturüberwachung zulassen. Damit lassen sich beispielsweise auch großflächige Wärmestrahler und Wärmetauscher mit Heizflächen aus Glaskeramik, Glas oder ähnlichen Materialien überwachen.

Die geometrische Anordnung der Leiterbahnen im Bereich einer Heizzone wird zweckmäßigerweise an die geometrische Anordnung der Heizelemente sowie an die erwartete Temperaturverteilung bei bekannten anomalen thermischen Belastungsfällen angepaßt.

Nachfolgend wird die Erfindung anhand der Figuren näher erläutert:

Es zeigen:

Figur 1    in einer schematischen Darstellung eine Vorrichtung zur Durchführung des erfindungsgemäßen Verfahrens bei einem Haushaltskochfeld mit Glaskeramikkochfläche, wobei zwei ring-förmige, zueinander konzentrisch angeordnete Temperatursensoren den Mitten- und den Randbereich einer Kochzone überwachen;

Figur 2    die Vorrichtung aus Figur 1 in einer Längsschrittdarstellung;

Figur 3    zur Verdeutlichung der Funktionsweise eines Glaskeramik-Temperaturmeßwiderstandes in einer schematischen Darstellung einen vergrößerten Ausschnitt aus einer Anordnung aus zwei parallel verlaufenden Leiterbahnen mit dazwischenliegendem Glaskeramikwiderstand;

Figur 4a    eine schematische Schaltungsanordnung für die Temperatursensoren aus Figur 1 zur Einstellung des Temperaturbereichs mit größter Meßempfindlichkeit;

Figur 4b    eine an sich bekannte Komparatorschaltung zur Auswertung der von den Temperatursensoren gelieferten Temperaturmeßsignale mit nachgeschaltetem Inverter zum Anzeigen anomaler Temperaturen;

Figur 5    die Temperaturmeßsignale für die bei Glaskeramikkochflächen am häufigsten auftretenden anomalen thermischen Belastungszustände und die entsprechenden Betriebszustandsanzeigen;

Figur 6    eine möglich Logikschaltung zum selbständigen Erkennen und Anzeigen eines anomalen thermischen Belastungszustandes.

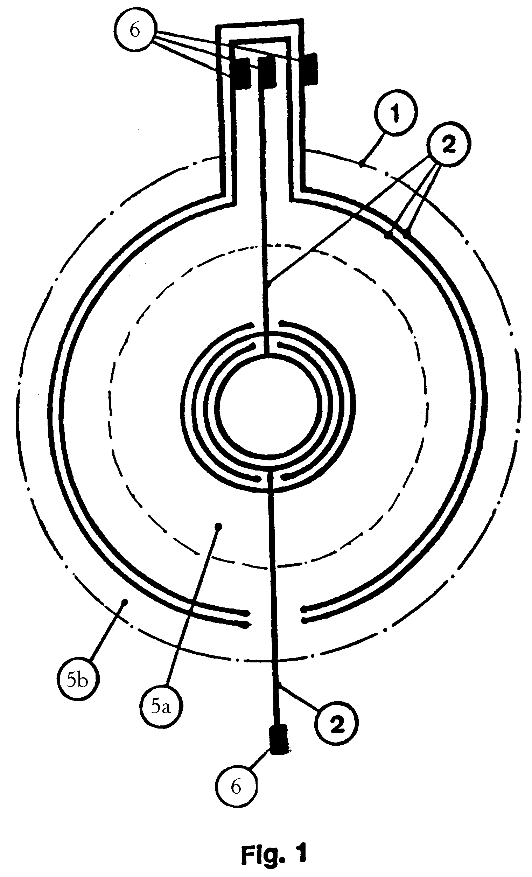

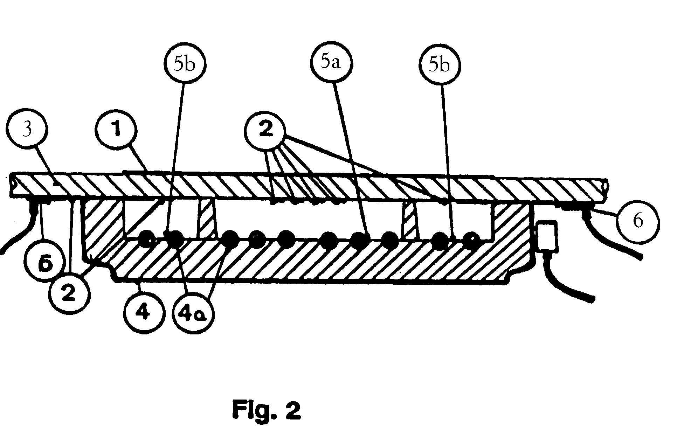

Die Figuren 1 und 2 zeigen beispielhaft eine bevorzugte Vorrichtung zur Durchführung des erfindungsgemäßen Verfahrens bei einem Haushaltkochfeld mit Glaskeramikkochfläche.

Innerhalb einer Kochzone (1) mit kreisförmiger Geometrie sind auf der Glaskeramikunterseite zwei Paare von Leiterbahnen (2), z.B. aus Gold, angeordnet. Diese begrenzen jeweils gemäß DE-PS 21 398 28 streifenförmige Temperaturmeßwiderstände. Ohne Beschränkung der Allgemeinheit ist in den Figuren 1 und 2 eine Kochzone mit einem unterhalb der Glaskeramikplatte (3) angeordneten, an sich bekannten Zweikreis-Heizelement (4) dargestellt, mit einem Innenkreis (5a) und einem Außenkreis (5b).

Die Art der Beheizung, d.h. Art der Heizelemente, deren Anzahl und geometrische Anordnung im Bereich der Kochzone, ist jedoch für die Durchführung des erfindungsgemäßen Verfahrens unerheblich.

Man erkennt in den Figuren, daß die Führung der Leiterbahnen (2) in der Kochzone (1) so gewählt ist, daß im Mittenbereich und im Randbereich jeweils ein ringförmiger Temperatursensor angeordnet ist, wobei die Anschlußbereiche (6) der Leiterbahnen (2) zum Schutz gegen Temperaturbelastungen außerhalb der Kochzone (1) angeordnet sind.

Aufgrund der einfachen Geometrie der Temperaturverteilung in der Kochzone bei einem der bekannten anomalen thermischen Belastungszustände reicht es in der Regel aus, den gesamten Kochzonenbereich mit nur jeweils einem Temperatursensor in einem äußeren und einem inneren Bereich der Kochzone zu überwachen, da es zum Erkennen des Belastungszustandes nur auf die Temperaturdifferenz zwischen dem Rand- und dem Mittenbereich der Kochzone ankommt. Da aber z.B. bei einer Topffehlstellung lokale Überhitzungen nur in einem Segment des Randbereichs auftreten können, muß sichergestellt sein, daß alle für einen Belastungsfall wesentlichen Stellen von der Temperatursensoranordnung erfaßt werden. Dies ist bei den in den Figuren dargestellten ringförmigen Leiterbahnenanordnungen in einfacher Weise gewährleistet. Es kann jedoch auch vorteilhaft sein, im Bereich einer Kochzone mehrere ringförmige, zueinander konzentrische Temperatursensoren so anzuordnen, daß auch Temperaturspitzen, z.B. über Heizwendelschleifen oder, bei Gasbeheizung, über Flammenspitzen detektiert und angezeigt werden können. Diese Temperaturspitzen müssen erfaßt werden, da sonst an diesen Stellen die Heizfläche beschädigt werden kann.

In einigen einfachen Fällen genügt es oft, nur den Mittenbereich oder nur den Randbereich der Kochzone zu überwachen, so daß dort auftretende Überhitzungen angezeigt werden können. In diesen Fällen ist vorgesehen, nur in einem der beiden Bereiche einen Temperatursensor anzuordnen.

Die Leiterbahnen (2) decken nur einen geringen Teil der Kochzone ab. Bevorzugt sind Leiterbahnbreiten von < 3 mm. Im vorliegenden Fall sind die Leiterbahnen 1-2 mm breit, so daß die Gesamtfläche der Leiterbahnen in Bezug auf die Fläche der beheizten Zone klein ist. Eine Beeinflussung des Gesamtwärmeflusses wird dadurch minimiert. Der Flächenwiderstand dieser Leiterbahnschichten ist $\leq 50$ m$\Omega/\square$ bei Schichtdicken unter 1 μm.

Man erhält so zwei voneinander unabhängige Temperatursensoren, die die beiden Bereiche der Kochzone getrennt überwachen. Analog zu der oben beschriebenen Anordnung werden für andere, nichtrunde Kochzonen den jeweiligen Umrissen bzw. Geometrien angepaßte Leiterbahnanordnung gewählt, mit denen die einzelnen Kochzonenbereiche getrennt überwacht werden können.

Die parallel geführten Leiterbahnen (2) innerhalb der Kochzone (1) begrenzen schmale kreis- oder linienförmige Temperaturmeßzonen, in denen das von den Leiterbahnen eingegrenzte Glaskeramik-Volumen als temperaturabhängiger Widerstand dient. Die elektrische Leitung der Glaskeramik beruht, wie bei Gläsern, auf der Ionenleitung. Die Abhängigkeit wird durch das Gesetz von Rasch und Hinrichsen beschrieben:

$$R = a * \exp(b/T) \tag{Gl. 1}$$

R ist der spezifische Widerstand der Glaskeramik in Ohm∗cm bei der absoluten Temperatur T in Kelvin.
a und b sind von der Geometrie der Leiterbahnen und von der Glaskeramik abhängige Konstanten (a in Ohm∗cm und b in K).

Der Temperaturkoeffizient dieser Meßwiderstände ist negativ. Er ist stark temperaturabhängig und beträgt z.B. für Glaskeramiken des Systems $SiO_2$-$Al_2O_3$-$Li_2O$ bei 300°C 3.3 %/°C.

Der elektrische Gesamtwiderstand einer solchen Anordnung setzt sich aus beliebig vielen parallel geschalteten differentiellen Widerständen mit negativem Temperaturkoeffizienten zusammen, und läßt sich durch die nachfolgende Gleichung ausdrücken:

$$1/R = 1/R_1(T) + 1/R_2(T) + ... + 1/R_i(T) + ... 1/R_n(T) \tag{Gl. 2}$$

Der temperaturabhängige Widerstand jedes differentiellen Widerstands $R_i(T)$ läßt sich durch die nachfolgende Gleichung ausdrücken

$$R_i(T_i) = l_i/A_i * a * \exp(b/T_i) \tag{Gl. 3}$$

worin $l_i$ die Länge in cm und $A_i$ die Querschnittsfläche in cm$^2$ eines jeden differentiellen Glaskeramik-Widerstands darstellen. Die Konstanten a und b sind von der Geometrie der Leiterbahnen und von der Glaskeramik abhängige Konstanten (a in Ohm∗cm und b in Kelvin). $T_i$ ist die absolute Temperatur eines jeden differentiellen Widerstands in Kelvin.

Der elektrische Gesamtwiderstand wird durch den kleinsten Widerstand an der Stelle der höchsten Temperatur der Sensorzonen bestimmt, woraus eine automatische Anzeige der Maximaltemperatur in der jeweiligen Sensorzone resultiert. Lokal auftretende hohe Temperaturen bewirken, daß ein oder mehrere differentielle Widerstände im Verhältnis zu den anderen differentiellen Widerständen, die in kälteren Zonen liegen, niederohmig werden, so daß der Gesamtwiderstand eines Sensors nach Gl. 2 sehr klein wird.

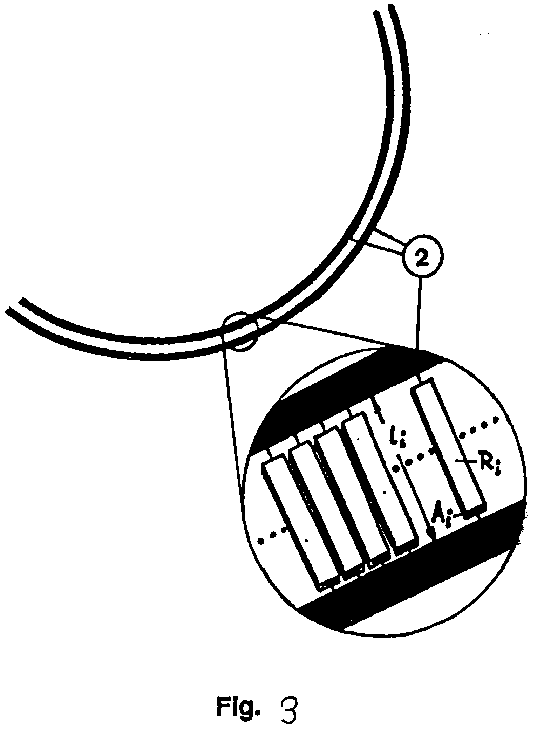

Figur 3 zeigt zur Verdeutlichung schematisch einen Ausschnitt von den gegenüber liegenden Leiterbahnen (2). Die dazwischen eingegrenzte Glaskeramik läßt sich als Parallelschaltung vieler temperaturabhängiger differentieller Widerstände auffassen.

Bei niedrigen Temperaturen besitzt diese Anordnung gemäß den Gln. 2 und 3 einen sehr hohen Widerstand. Bei höheren Temperaturen, beispielsweise den typischen Temperaturen, die im Leerlauf gemessen werden, nimmt der Widerstand um mehrere Größenordnungen ab. Ebenso nimmt der Widerstand erheblich ab, wenn nur in einem kleinen Bereich der Glaskeramik hohe Temperaturen auftreten, z.B. beim versetzten Topf. Ein Temperaturausgleich zwischen benachbarten Zonen, die unterschiedliche Temperaturen besitzen, findet aufgrund der geringen Wärmeleitung bei Glas, Glaskeramik oder ähnlichem Material mit einem $\lambda$ von typisch kleiner 2 W/mK kaum statt.

Die Umsetzung der temperaturabhängigen Leitfähigkeitsänderung der Glaskeramik in ein Meßsignal läßt sich in einem mit Wechselspannung versorgten Spannungsteiler realisieren, in dem ein Widerstand durch den temperaturabhängigen Widerstand der Sensorflächen gebildet wird. Die Festwiderstände des Spannungsteilers müssen, abhängig von der Sensorgeometrie, so gewählt werden, daß bei Temperaturen, die die zulässige Temperatur/Zeit-Belastung überschreiten, für die Weiterverarbeitung ausreichende Signaländerungen am Spannungsteiler abgegriffen werden können. Der Temperaturbereich, in dem der größte Signalhub auftritt, kann durch Anpassen der Festwiderstände geändert werden. Die Festwiderstände dienen gleichzeitig der Strombegrenzung.

Die Wechselspannung ist erforderlich, um Polarisationseffekte der Glaskeramik und die damit verbundene elektrochemische Zersetzung aufgrund der Ionenwanderung zu vermeiden. Bevorzugt werden für die anliegende Wechselspannung Frequenzen, die im Bereich zwischen 50 Hz und 1000 Hz liegen.

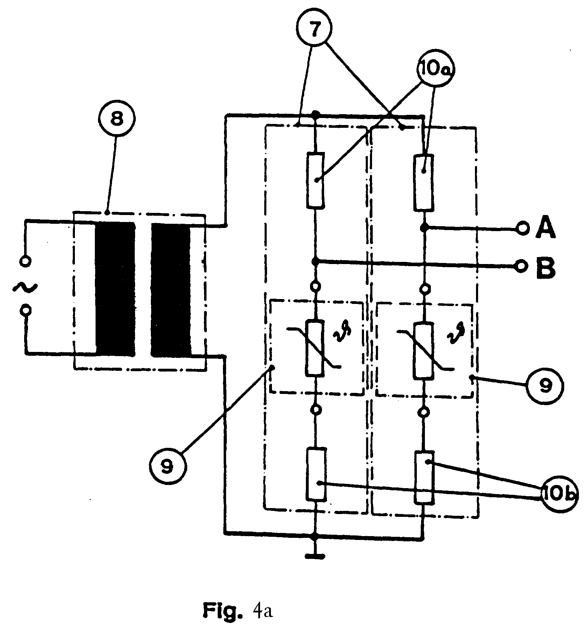

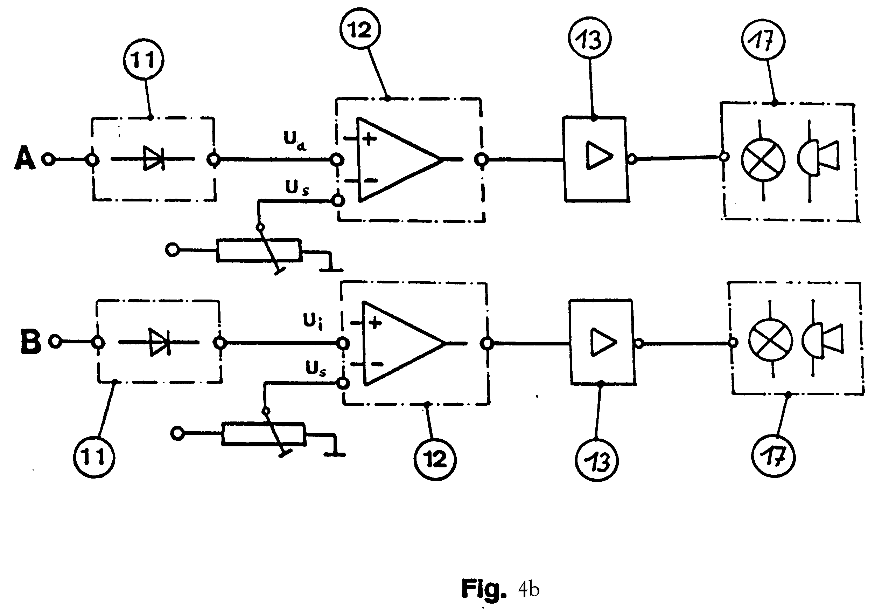

Figur 4a zeigt schematisch die Schaltungsanordnung gemäß der Erfindung, wobei jeweils ein Spannungsteiler (7) für jeden Temperatursensor dargestellt ist. Beide Spannungsteiler werden von einer Wechselspannungsquelle (8), hier als Transformator dargestellt, versorgt. Damit ist sichergestellt, daß die Glaskeramik, hier als temperaturabhängiger Widerstand (9) dargestellt, nicht von Gleichstrom durchflossen wird. Die beiden Festwiderstände (10a) und (10b) wurden so gewählt, daß eine große Signaländerung im Bereich von 500 bis 600°C auftritt. Dieser Temperaturbereich ist charakteristisch für die in der Praxis vorkommenden Oberflächentemperaturen innerhalb der Kochzonen (1) von Glaskeramikkochfeldern.

Über eine Gleichrichterschaltung wird das am Spannungsteiler anstehende Wechselspannungssignal gleichgerichtet und einer geeigneten elektronischen Schaltung zugeführt. Dies sind bevorzugt Operationsverstärker, die als Komparatoren geschaltet sind. Es können aber auch andere aus der Elektronik bekannte Schaltungen und Bauelemente, wie $\mu$-Prozessoren oder dergleichen verwendet werden.

Die von den Sensoren gelieferten Signale werden in diesen Schaltungen derart verarbeitet, daß an deren Ausgang ein Signal zur Verfügung steht, mit dem sich Anzeigen und/oder Warneinrichtungen steuern lassen.

In der Anordnung in Figur 4b wird das am Spannungsteiler (7) abgegriffene Signal über eine Gleichrichterschaltung (11) dem einen Eingang eines als Komparator geschalteten Operationsverstärkers (12) zugeführt. Der Komparator hat die Aufgabe, das von der Sensoranordnung stammende temperaturabhängige Signal mit einem fest eingestellten Spannungswert, der Schwellenspannung Us in Figur 4b zu vergleichen. Liegt die Spannung vom Sensor über der Schwellenspannung, was in der vorliegenden Anordnung bei verhältnismäßig niedrigen Temperaturen der Fall wäre, z.B. bei Verwendung guten Geschirrs, wird der Ausgang des Komparators durchgeschaltet. Dieses Signal wird über einen Inverter (13) der Anzeige bzw. der Warneinrichtung (17) zugeführt.

Bei Unterschreiten der Schwellenspannung mit zunehmender Temperatur schaltet der Ausgang des Komparators (12) auf negatives Potential. Durch Invertieren dieses Signals wird die optische und/oder akustische Warneinrichtung geschaltet.

Für die Praxis hat dies folgende Auswirkungen:

Bei Verwendung guten Geschirrs bleibt die Oberflächentemperatur der Glaskeramik sowohl im Außenbereich als auch im Innenbereich unterhalb einer der Schwellenspannung entsprechenden Temperatur. Die Ausgänge der beiden Komparatoren besitzen ein positives Potential.

Bei schlechtem Kochgeschirr mit eingezogenem Boden erhitzt sich die Glaskeramik unter dem Topfboden aufgrund des schlechten Wärmeentzugs im Mittenbereich der Kochzone wesentlich stärker als im Randbereich, da im Randbereich die Glaskeramik in Kontakt mit dem Topfboden steht. Demzufolge besitzt der Ausgang des dem Mittenbereich zugeordneten Komparators negatives, der Ausgang des dem Randbereich zugeordneten Komparators positives Potential. Danach wird eine Überhitzung im Mittenbereich angezeigt.

Bei den ebenfalls möglichen Belastungsfällen "nach außen gewölbter Topfboden", "versetzter Topf" oder "zu kleiner Topf", erhitzt sich der Randbereich der Kochzone stärker als der Mittenbereich, so daß sich die oben beschriebenen Verhältnisse gerade umkehren.

Für den Fall, daß ein Topf leerkocht, steigt die Temperatur der Glaskeramik im Mitten- und Randbereich stark an. In diesem Fall besitzen beide Komparatorausgänge positives Potential. Die Überhitzung der gesamten Kochzone wird detektiert.

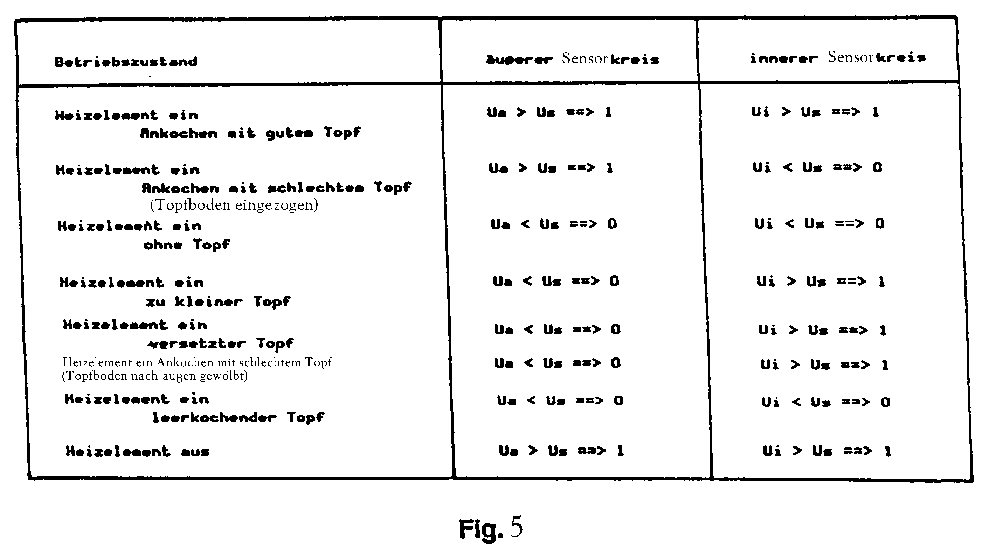

In Figur 5 sind die Betriebszustände und deren Auswirkung auf die Schaltung aus den Figuren 4a und 4b tabellarisch zusammengestellt.

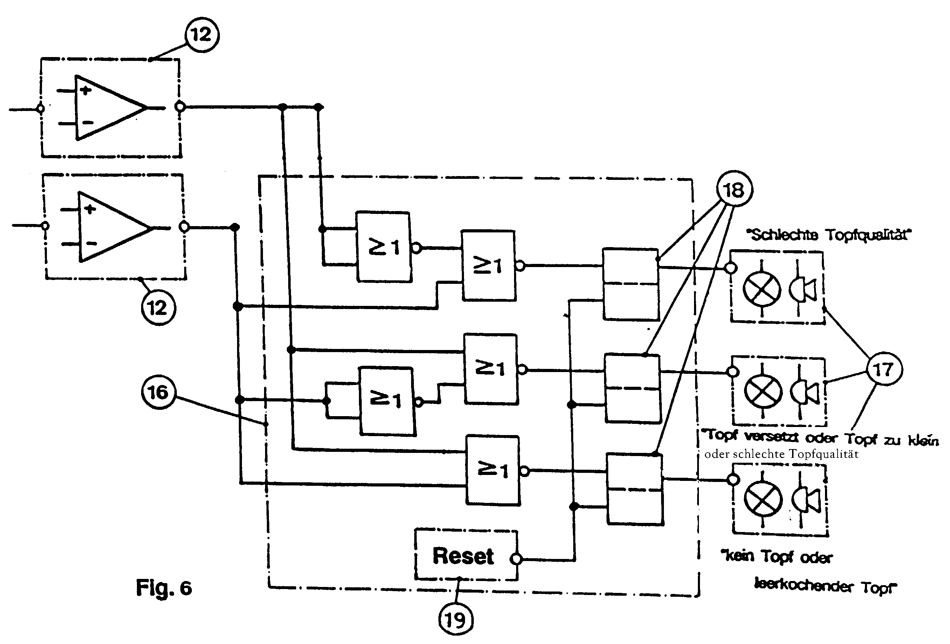

Mit den Sensorsignalen läßt sich auf recht einfache Weise, wie in Figur 6 schematisch dargestellt, eine Logik-Schaltung (16) realisieren, mit der eine Topfqualitätserkennung ermöglicht wird. Geeignete Logik-Schaltungen können beispielsweise aus NOR- oder NAND-Gattern und/oder μ-Prozessoren aufgebaut sein.

Ebenso lassen sich die durch Unachtsamkeit und Fehlbedienung hervorgerufenen Betriebszustände mit einer solchen Logik-Schaltung detektieren, und dem Benutzer optisch oder akustisch anzeigen (17). Ein Takten der Anzeigen wird vermieden, wenn beispielsweise über einen Flip-Flop (18) die Betriebszustandsanzeige gespeichert wird. Beim Ausschalten des Heizelements können die Betriebsanzeigen über eine geeignete Reset-Schaltung (19) zurückgesetzt werden.

Die mit der Erfindung erzielbaren Vorteile liegen insbesondere darin, daß durch Unachtsamkeit verursachte Betriebszustände mit dem oben beschriebenen System erkannt und dem Benutzer angezeigt werden. Die Sicherheit wird dadurch entscheidend verbessert. Zusätzlich wird ein Energieeinspareffekt dadurch erzielt, daß dem Benutzer frühzeitig Betriebszustände angezeigt werden, bei denen der Wirkungsgrad des Kochsystems, z.B. durch Verwendung schlechter Topfqualitäten oder nicht an die Heizelementgröße angepaßter Topfgrößen, gering ist.

## Patentansprüche

1. Verfahren zum Erkennen und Anzeigen eines anomalen thermischen Belastungszustandes bei einer Heizfläche aus Glaskeramik oder einem vergleichbaren Material, insbesondere einer Glaskeramikkochfläche,
**dadurch gekennzeichnet**,
daß man mittels mehrerer, voneinander unabhängiger, im Bereich einer Heizzone angeordneter Temperatursensoren die für einen bestimmten anomalen thermischen Belastungszustand charakteristische Temperaturverteilung in der Heizfläche bestimmt und mittels Betriebszustandsanzeigen und/oder optischer und/oder akustischer Warneinrichtungen anzeigt.

2. Verfahren nach Anspruch 1,
**dadurch gekennzeichnet**,
daß man die von den einzelnen Temperatursensoren gelieferten Temperaturmeßsignale an sich bekannten Komparatorschaltungen zuführt, welche nur bei Überschreiten einer vorgegebenen Schwellentemperatur aus dem Temperaturmeßsignal ein Steuersignal für die Anzeige- und Warneinrichtungen erzeugen.

3. Verfahren nach Anspruch 1 oder 2,
**dadurch gekennzeichnet**,
daß man die von den Komparatorschaltungen erzeugten Signale geeigneten Logikschaltungen zuführt, die einer gemessenen Temperaturverteilung im Heizzonenbereich selbständig einen bestimmten anomalen thermischen Belastungszustand zuordnen.

4. Verfahren nach wenigstens einem der Ansprüche 1-3,
**dadurch gekennzeichnet**,
daß man bei einer Glaskeramikkochfläche die Temperatur im Mitten- und Randbereich der Kochzone getrennt mißt.

5. Verfahren nach wenigstens einem der Ansprüche 1-4,
**dadurch gekennzeichnet**,
daß man als für die Temperatur der Heizfläche relevante Größe in an sich bekannter Weise den temperaturabhängigen, elektrischen Widerstand des Heizflächenmaterials bestimmt.

6. Vorrichtung zur Durchführung des Verfahrens nach wenigstens einem der Ansprüche 1-5, bei einem Kochfeld mit Glaskeramikkochfläche,
**gekennzeichnet durch**

- wenigstens einen Temperatursensor im Randbereich der Kochzone,

- wenigstens einen weiteren Temperatursensor im Mittenbereich der Kochzone, wobei die Temperatursensoren im Randbereich und im Mittenbereich voneinander unabhängig sind und so angeordnet sind, daß jeweils alle für einen Belastungsfall wesentlichen Stellen in der Kochzone erfaßt sind,
- an sich bekannte elektronische Schaltungen zur Auswertung der Temperaturmeßsignale sowie
- geeignete Betriebszustandsanzeigen und/oder optische und/oder akustische Warneinrichtungen zur Anzeige des mit den Temperatursensoren ermittelten Betriebszustandes.

7. Vorrichtung nach Anspruch 6,
   **dadurch gekennzeichnet**,
   daß die elektronischen Schaltungen an sich bekannte Komparatorschaltungen sind.

8. Vorrichtung nach Anspruch 6 oder 7,
   **dadurch gekennzeichnet**,
   daß den Komparatorschaltungen geeignete Logikschaltungen nachgeordnet sind, die einer gemessenen Temperaturverteilung selbständig einen bekannten anomalen thermischen Belastungszustand zuordnen.

9. Vorrichtung nach wenigstens einem der Ansprüche 6-8,
   **dadurch gekennzeichnet**,
   daß die Temperatursensoren zueinander konzentrische schmale ringförmige Bereiche in der Kochzone abdecken.

10. Vorrichtung nach wenigstens einem der Ansprüche 6-9,
    **dadurch gekennzeichnet**,
    daß die Temperatursensoren an sich bekannte, in der Heizfläche durch parallel geführte Leiterbahnen abgegrenzte und kontaktierte Glaskeramiktemperaturmeßwiderstände sind.

## Claims

1. Method for detecting and indicating an anomalous thermal loading state in the case of a heating surface made of glass ceramic or a comparable material, in particular a glass-ceramic cooking surface, characterized in that the temperature distribution in the heating surface typical of a certain anomalous thermal loading state is determined by means of a plurality of mutually independent temperature sensors disposed in the region of a heating zone and is indicated by means of operating state indicators and/or visual and/or audible warning devices.

2. Method according to Claim 1, characterized in that the temperature measurement signals supplied by the individual temperature sensors are fed to comparator circuits which are known per se and which generate a control signal for the indicating and warning devices from the temperature measurement signal only if a specified threshold temperature is exceeded.

3. Method according to Claim 1 or 2, characterized in that the signals generated by the comparator circuits are fed to suitable logic circuits which independently associate a certain anomalous thermal loading state with a measured temperature distribution in the heating zone region.

4. Method according to at least one of Claims 1 - 3, characterized in that, in the case of a glass-ceramic cooking surface, the temperature in the central region and the peripheral region of the cooking zone are measured separately.

5. Method according to at least one of Claims 1 - 4, characterized in that the temperature-dependent electrical resistance of the heating surface material is determined in a manner known per se as the relevant variable for the temperature of the heating surface.

6. Device for carrying out the method according to at least one of Claims 1 - 5 in the case of a cooking hob having glass-ceramic cooking surface, characterized by

   - at least one temperature sensor in the peripheral region of the cooking zone,
   - at least one further temperature sensor in the central region of the cooking zone, the temperature sensors in the peripheral region and in the central region being independent of one another and being disposed in such a way that, in every case, all the essential points for a loading case are measured in the cooking zone,

- electronic circuits known per se for evaluating the temperature measurement signals and
- suitable operating state indicators and/or visual and/or audible warning devices for indicating the operating state determined by the temperature sensors.

**7.** Device according to Claim 6, characterized in that the electronic circuits are comparator circuits known per se.

**8.** Device according to Claim 6 or 7, characterized in that suitable logic circuits which independently associate a known anomalous thermal loading state with a measured temperature distribution are disposed downstream of the comparator circuits.

**9.** Device according to at least one of Claims 6 - 8, characterized in that the temperature sensors cover mutually concentric, narrow annular regions in the cooking zone.

**10.** Device according to at least one of Claims 6 - 9, characterized in that the temperature sensors are glass-ceramic temperature measuring resistors which are known per se and which are delineated and contacted by conductor tracks routed in parallel in the heating surface.

**Revendications**

**1.** Procédé de détection et d'affichage d'un état anormal de sollicitation thermique dans une surface chauffante en vitrocéramique ou en un matériau similaire, en particulier dans une table de cuisson en vitrocéramique, caractérisé par le fait qu'au moyen de plusieurs capteurs de température indépendants les uns des autres, disposés dans la région d'un foyer, on détermine la distribution de température dans la surface de chauffage caractéristique d'un état anormal de sollicitation thermique et on l'indique à l'aide de moyens d'affichage d'état de fonctionnement et/ou de dispositifs d'alarme optique et/ou acoustique.

**2.** Procédé selon la revendication 1, caractérisé par le fait que l'on envoie les signaux de mesure de température délivrés par les différents capteurs de température à des circuits comparateurs connus qui, seulement en cas de dépassement vers le haut d'une température seuil prédéterminée, produisent à partir du signal de mesure de température un signal de commande pour les dispositifs d'affichage et d'alarme.

**3.** Procédé selon la revendication 1 ou 2, caractérisé par le fait que l'on envoie les signaux produits par les circuits comparateurs à des circuits logiques adaptés qui associent automatiquement un état anormal de sollicitation thermique à une distribution de température mesurée dans la zone du foyer.

**4.** Procédé selon au moins une des revendications 1 à 3, caractérisé par le fait que, dans une table de cuisson en vitrocéramique, on mesure séparément la température dans la région du bord et dans la région du centre du foyer.

**5.** Procédé selon au moins une des revendications 1 à 4, caractérisé par le fait que l'on détermine comme grandeur caractéristique de la température de la surface chauffante, de manière connue, la résistance électrique du matériau de la surface chauffante dépendant de la température.

**6.** Dispositif pour la mise en oeuvre du procédé selon au moins une des revendications 1 à 5 dans une table de cuisson à surface de cuisson en vitrocéramique, caractérisé par

- au moins un capteur de température placé dans la région du bord du foyer,
- au moins un capteur de température supplémentaire placé dans la région du centre du foyer, les capteurs de température dans la région du bord et dans la région du centre étant indépendants les uns des autres et étant disposés de telle sorte qu'à chaque fois tous les points importants pour un état de sollicitation soient pris en compte,
- des circuits électroniques connus pour exploiter les signaux de mesure de température et
- des moyens adaptés d'affichage des états de fonctionnement et/ou des dispositifs d'alarme optique et/ou acoustiques pour indiquer l'état de fonctionnement déterminé à l'aide des capteurs de température.

**7.** Dispositif selon la revendication 6, caractérisé par le fait que les circuits électroniques sont des circuits comparateurs connus.

8.  Dispositif selon la revendication 6 ou 7, caractérisé par le fait qu'à la suite des circuits comparateurs sont placés des circuits logiques adaptés qui associent automatiquement un état anormal connu de sollicitation thermique à une distribution de température mesurée.

9.  Dispositif selon au moins une des revendications 6 à 8, caractérisé par le fait que les détecteurs de température couvrent des zones annulaires étroites mutuellement concentriques du foyer.

10. Dispositif selon au moins une des revendications 6 à 9, caractérisé par le fait que les détecteurs de température sont des résistances de mesure de vitrocéramique connues qui sont délimitées dans la surface de chauffe par des pistes conductrices parallèles et sont conectées électriquement.

**Fig. 1**

Fig. 2

**Fig.** 3

**Fig.** 4a

**Fig.** 4b

EP 0 467 134 B1

| Betriebszustand | äuperer Sensorkreis | innerer Sensorkreis |
|---|---|---|
| Heizelement ein<br>Ankochen mit gutem Topf | $Ua > Us ==> 1$ | $Ui > Us ==> 1$ |
| Heizelement ein<br>Ankochen mit schlechtem Topf<br>(Topfboden eingezogen) | $Ua > Us ==> 1$ | $Ui < Us ==> 0$ |
| Heizelement ein<br>ohne Topf | $Ua < Us ==> 0$ | $Ui < Us ==> 0$ |
| Heizelement ein<br>zu kleiner Topf | $Ua < Us ==> 0$ | $Ui > Us ==> 1$ |
| Heizelement ein<br>versetzter Topf | $Ua < Us ==> 0$ | $Ui > Us ==> 1$ |
| Heizelement ein Ankochen mit schlechtem Topf<br>(Topfboden nach außen gewölbt) | $Ua < Us ==> 0$ | $Ui > Us ==> 1$ |
| Heizelement ein<br>leerkochender Topf | $Ua < Us ==> 0$ | $Ui < Us ==> 0$ |
| Heizelement aus | $Ua > Us ==> 1$ | $Ui > Us ==> 1$ |

**Fig. 5**

EP 0 467 134 B1

Fig. 6